## Europäisches Patentamt

## European Patent Office

## Office européen des brevets

(19)

(11) Veröffentlichungsnummer: **0 004 017**

**A1**

(12)

# EUROPÄISCHE PATENTANMELDUNG

(21) Anmeldenummer: 79100570.5

(22) Anmeldetag: 26.02.79

(51) Int. Cl.$^2$: **H 01 B 3/44**
C 08 L 23/08, C 08 L 33/08

(30) Priorität: 02.03.78 DE 2809294
17.11.78 DE 2849940

(43) Veröffentlichungstag der Anmeldung:
19.09.79 Patentblatt 79/19

(84) Benannte Vertragsstaaten:
BE CH DE FR GB IT NL SE

(71) Anmelder: AEG-TELEFUNKEN Kabelwerke
Aktiengesellschaft, Rheydt
Sommerfeld 22-28
D-4330 Mülheim (Ruhr)13(DE)

(72) Erfinder: Briem, Horst
Heerstrasse 12 A
D-4330 Mülheim(DE)

(72) Erfinder: Förster, Joachim
Eppinghoferstrasse 162
D-4330 Mülheim(DE)

(72) Erfinder: Mayer, Hans-Anton
Saarnerstrasse 50
D-4330 Mülheim(DE)

(72) Erfinder: Krestel, Wilhelm
Kleiststrasse 16
D-4330 Mülheim(DE)

(74) Vertreter: Reuther, Wolfgang, Dipl.-Ing. et al,
Theodor-Stern-Kai 1
D-6000 Frankfurt/Main 70(DE)

(54) Flammwidrige halogenfreie Polymermischungen und ihre Verwendung.

(57) Halogenfreie Polymermischungen auf der Basis von Copolymeren von Olefinen mit Acrylsäureestern, Äthylen-Acrylatkautschuk, Acrylatkautschuk oder deren Verschnitten untereinander oder mit anderen Polymeren enthalten auf 100 Teile Basismischung 90 bis 200 Teile, vorzugsweise 120 - 180 Teile, Aluminiumoxydhydrat, das durch Fällung hergestellt ist, eine Teilchengröße von höchstens 6 $\mu$m und eine spezifische Oberfläche von mehr als 6 m²/g hat und das - bezogen auf den Aluminiumoxydanteil - mehr als 0,25 % Natriumoxyd einschließlich mindestens 0,05 % lösliches Natriumoxyd enthält. Diese Polymermischungen sind flammwidrig, öl- und lösungsmittelbeständig und seewasserfest und haben gute mechanische Eigenschaften. Sie werden als Isolier-, Füll- und Mantelmischungen für elektrische Kabel und Leitungen oder zur Herstellung von Boden- und Wandbelägen und technischen Artikeln vielfacher Art eingesetzt.

B 77/112 Hr

# Flammwidrige halogenfreie Polymermischungen

## und ihre Verwendung

Die Erfindung betrifft halogenfreie Polymermischungen und ihre Verwendung.

Für den Einsatz auf vielen Anwendungsgebieten
werden flammwidrige Polymermischungen gefordert.
Dies gilt insbesondere für Kabel und Leitungen
in Gebäuden, Transportmitteln, Industrieanlagen,
Schaltanlagen, Kraftwerken, Schiffen usw., aber
auch für Wand- und Bodenbeläge in Gebäuden und
für vielfältige andere technische Artikel. Hierfür
werden bisher in erster Linie halogenhaltige
Polymermischungen verwendet, die durch ihre Halogenbestandteile flammwidrig sind. Dem Vorteil der Flammwidrigkeit dieser Kunststoffe steht der schwere Nachteil gegenüber, daß sich im Brandfall oder bei thermischen Überlastungen Halogenverbindungen, wie z.B. Salzsäure, in Form von korrosiven oder toxischen Gasen abspalten können. Daraus ergeben sich häufig beträchtliche Folgeschäden durch Korrosion in Anlagen und Bauteilen, die höher sein können, als die primären Brandschäden.

Es gibt zahlreiche Versuche, die Abspaltung und Ausbreitung von Halogenwasserstoffen aus halogenhaltigen Polymermischungen zu verhindern. Bisher ist man aber nicht zu befriedigenden Ergebnissen gekommen. Auch der Einsatz halogenarmer Polymermischungen kann nicht befriedigen, da sich aus ihnen ebenfalls Halogenverbindungen abspalten, die zu Korrosiven bzw. toxischen Spaltprodukten führen können.

Es gibt daher seit einiger Zeit Bestrebungen, auch halogenfreie Polymermischungen durch Zugabe geeigneter Zusätze flammwidrig zu machen und ihnen zugleich ebenso gute Gebrauchseigenschaften zu geben, wie sie die zu ersetzenden halogenhaltigen Mischungen haben. Die hierfür erforderliche hohe Füllung der in Frage kommenden halogenfreien Polymere ist jedoch mit Schwierigkeiten verbunden. Schon die Einmischbarkeit selbst setzt der Füllung der Polymeren mit

0004017

geeigneten Zusätzen Grenzen. Aber auch die bei
hoher Füllung gewöhnlich eintretende Verschlechterung der mechanischen und physikalischchemischen Eigenschaften, die Steifigkeit und
Starrheit, die schlechte Zerreißfestigkeit und
Bruchdehnung begrenzen die Füllbarkeit der
Polymere.

Aus der DE-OS 24 57 980 ist eine nicht brennbare
Polyolefinmasse bekannt, die einen pulverförmigen
Füllstoff vom Cellulosetyp und einen anorganischen
Füllstoff enthält. Als anorganische Füllstoffe
sind insbesondere Aluminiumhydroxyd, Magnesiumhydroxyd oder basisches Magnesiumcarbonat vorgesehen. Der pulverförmige Cellulose-Füllstoff
ist ein wesentlicher Bestandteil dieser Mischung,
da er die durch das Aluminiumhydroxyd hervorgerufene Neigung der Mischung zum Schäumen verhindert. Das aus dieser Mischung hergestellte
Produkt ist starr und steif und eignet sich insbesondere nicht zur Herstellung von Kabelisolierungen
und -mänteln.

Die aus der US-PS 39 22 442 bekannte halogenfreie
Polymermischung enthält als Basispolymer mindestens
66 % vernetzbares Äthylen-Vinylacetat-Copolymer
(EVA) und als flammhemmende Zusätze Silan und
Aluminiumhydroxyd. Nach dieser Schrift wird die
gewünschte flammhemmende Wirkung des Aluminiumhydroxyds erst in Verbindung mit dem Silanzusatz,
der als essentiell angesehen wird, erreicht, wobei

0Q04017

umständliche Prozeduren erforderlich sind, den Silanzusatz in getrennten Arbeitsgängen auf den Füllstoff zu verteilen.

Der vorliegenden Erfindung liegt die Aufgabe zugrunde, halogenfreie Polymermischungen anzugeben, die nicht nur im erforderlichen Maß flammwidrig, öl- und lösungsmittelbeständig und seewasserfest sind, sondern die auch gut zu verarbeiten sind, ausreichende Flexibilität haben, deren Zerreiß- und Abriebfestigkeitswerte auch hohen Anforderungen genügen und die im Brandfall möglichst wenig Rauch entwickeln.

Gelöst wird diese Aufgabe erfindungsgemäß dadurch, daß sie als Basispolymere Copolymere von Olefinen mit Acrylsäureestern, Äthylen-Acrylatkautschuk, Acrylatkautschuk oder deren Verschnitte untereinander oder mit anderen polymeren Zusätzen wie Nitrilkautschuk, Polyäthylen oder Copolymerisaten von Olefinen und als Zusatz - bezogen auf 100 Teile Basispolymergemisch - 90 - 200 Teile Aluminiumoxydhydrat enthalten, dessen Teilchengröße überwiegend kleiner als 6 $\mu$m ist, das eine spezifische Oberfläche von mindestens 6 $m^2$/g hat und das - bezogen auf den Aluminiumoxydanteil - mehr als 0,25 % $Na_2O$ einschließlich mindestens 0,05 % lösliches $Na_2O$ enthält. Vorzugsweise enthält das Basispolymergemisch 120 - 180 Teile Aluminiumoxydhydrat. Die Teilchengröße der Aluminiumoxydhydrat-Partikel von höchstens 6 $\mu$m und ihre spezifische Oberfläche von mindestens 6 $m^2$/g erhalten sie durch Fällung des Aluminiumoxydhydrats.

0004017

Das Natriumoxyd ($Na_2O$) ist in Mengen von vorzugsweise mindestens 0,4 %, einschließlich mindestens 0,10 % lösliches $Na_2O$, im Aluminiumoxydhydrat enthalten.

Die Polymermischungen können auf 100 Teile Basispolymergemisch zusätzlich 10 - 50 Teile Natriummetaborat, Magnesiumoxyd, Magnesiumoxydhydrat und/oder 10 - 70 Teile Magnesiumcarbonat enthalten. Als Weichmacher ist ein Zusatz von 0 - 50 Teilen Trikresylphosphat oder Diphenylkresylphosphat bevorzugt. Als besonders vorteilhaft wird es angesehen, wenn in 100 Teilen Basispolymergemisch mindestens 20 Teile Äthylenacrylat-Kautschuk und/oder Nitrilkautschuk enthalten sind.

Besonders günstige mechanische Eigenschaften erhalten die Polymermischungen neben ihrer guten Flammwidrigkeit, wenn die Teilchengröße des Aluminiumoxydhydrats in erfindungsgemäßer Weise 0,01 - 2.0 $\mu$m und seine spezifische Oberfläche mindestens 10 $m^2$/g, vorzugsweise jedoch mindestens 12 $m^2$/g beträgt. Das Schüttgewicht des Aluminiumoxydhydrats ist dann kleiner als 170 g/Liter.

Die erfindungsgemäßen Polymermischungen werden vorzugsweise vernetzt.

Die Erfindung betrifft auch die Verwendung der angegebenen Polymermischungen als Isoliermischungen, Füllmischungen und/oder Mantelmischungen für elektrische Kabel und Leitungen. Sie werden erfindungsgemäß außerdem für die Herstellung von Boden- und Wandbelägen und technischen Artikeln, wie Transportbändern, Dichtungen, gummierten Textilien usw. verwendet.

Der Vorteil der Erfindung besteht darin, daß halogenfreie Polymermischungen bereitgestellt werden, die flammwidrig, öl- und seewasserbeständig, raucharm und gut geeignet für die Weiterverarbeitung sind. Ihre mechanischen Eigenschaften wie Flexibilität, Zerreißfestigkeit und Abriebfestigkeit sind sehr gut. Mit erfindungsgemäßen Polymermischungen umhüllte oder ausgerüstete Kabel und unter Verwendung dieser Mischungen hergestellte andere Gegenstände bestehen die nach internationalen Normen wie IEEE-383, SEN-F-4, VDE usw. vorgesehenen Brandtests. Die gute Ölbeständigkeit der erfindungsgemäßen Polymermischungen zeigt die Tatsache, daß die Veränderung ihrer Zerreißfestigkeit und Bruchdehnung nach 7 Tagen Lagerung in ASTM-Öl Nr. 2 bei 90°C unter 30 % liegt. Auch eine 24-stündige Lagerung bei 100°C in ASTM-Öl Nr. 2 führt nicht zu größeren Veränderungen. Ein besonderer Vorteil der erfindungsgemäßen Polymermischungen besteht darin, daß bei besonders kleinen Teilchendurchmessern des Aluminiumoxydhydrats von 0,01 - 2,0 $\mu$m und großer spezifischer Oberfläche von mehr als 12 m$^2$/g überraschend hohe Zerreißfestigkeitswerte erzielt werden. Diese liegen über

10 Newton/mm$^2$ und können sogar Werte von 12 - 18 Newton/mm$^2$ erreichen. Auch die sehr gute Verarbeitbarkeit der erfindungsgemäßen Mischungen ist wegen der unüblichen, sehr hohen Dosierung des Aluminiumoxydhydrats ein unerwarteter Vorteil.

Die erfindungsgemäßen Mischungen können universell angewandt werden. Aus den Mischungen hergestellte Gegenstände sind sehr reißfest und dabei gleichzeitig überaus ölbeständig und im Brandfall raucharm. Daher werden sie mit besonderem Vorteil zur Herstellung von Isolierungen und Mänteln von Kabeln, für Bergwerke, Schiffe, Kraftwerke, Schaltanlagen usw. verwendet. Wegen ihrer erreichbaren hohen Abriebfestigkeit und Einreißfestigkeit sind die Mischungen auch für die Herstellung von Baggerleitungen, Schläuchen und Transportbändern gut geeignet. Auch für die Verwendung in Gebäuden, Transportmitteln, Aufzugsanlagen, Schalt- und Industrieanlagen, kurz überall dort, wo es auf die Verwendung besonders reißfester und dabei flammwidriger, möglichst ölbeständiger Materialien und auf besonders geringe Korrosionsgefahr ankommt, sind die erfindungsgemäßen Mischungen mit großem Vorteil einsetzbar. Auch die gute Seewasserfestigkeit der erfindungsgemäßen Mischungen ist von großem Vorteil.

Die Basispolymergemische der erfindungsgemäßen Polymermischungen bestehen aus Copolymeren oder Terpolymeren von Olefinen, insbesondere aus Copolymeren von Äthylen mit Acrylsäureestern, wie

0004017

z.B. Äthylacrylat oder Butylacrylat. Auch Styrol-
Acrylnitrilcopolymere (Nitrilkautschuk) sind als
Basispolymer geeignet. Ebenso eignen sich Acrylat-
Kautschuke, wie Copolymere von Methoxyäthylacrylat
oder Äthoxyäthylacrylat mit Butylacrylat oder
Äthylacrylat. Ein bevorzugtes Basispolymergemisch
besteht aus Äthylen-Acrylat-Kautschuk, zum Beispiel aus Copolymer von Äthylen mit Methylacrylat
und Acrylsäure. Den Basispolymergemischen können
in begrenzten Mengen auch Äthylen-Propylen-
Copolymere oder Äthylen-Propylen-Dien-Terpolymere
zugesetzt werden. Zusätzlich können in geringen
Mengen andere polymere oder copolymere Zusätze
hinzugefügt werden, wie beispielsweise Polyäthylen,
Nitrilkautschuk oder Copolymerisate von Olefinen
mit Butylacrylat oder Äthylacrylat. Bei der
Dosierung dieser Zusätze ist zu beachten, daß sie
die Zerreißfestigkeitswerte und die Ölbeständigkeit
der Mischungen herabsetzen können.

Erfindungsgemäß ist diesen Basispolymergemischen
Aluminiumoxydhydrat in Mengen von 90 - 200 Teilen
auf 100 Teile Basispolymergemisch zugesetzt.
Vorzugsweise enthält es 120 - 180 Teile Aluminiumoxydhydrat. Das Aluminiumoxydhydrat kann entsprechend
der Formel $Al_2O_3 \cdot 3H_2O$ oder als Aluminiumoxydhydrat entsprechend der Formel $Al(OH)_3$ vorliegen.
Die für hohe Brandsicherheit erforderlichen großen
Mengen Aluminiumoxydhydrat sind in die üblichen
Compounds nicht ohne weiteres einmischbar, ohne
einen Teil der gewünschten Eigenschaften der
Mischungen zu verschlechtern.

0004017

Das den Basispolymergemischen zugesetzte Aluminiumoxydhydrat soll daher gemäß der Erfindung ganz
speziell ausgewählte Kriterien aufweisen. Diese
Kriterien sind Teilchengrößen von weniger als
6 $\mu$m, eine spezifische Oberfläche von mehr als
6 m$^2$/g und ein geringer Anteil an Natriumoxyd.
Dadurch wird es in größeren Mengen einmischbar,
und die gewonnenen Polymermischungen entsprechen
allen gestellten Anforderungen.

Die in unerwarteter Weise besonders wirksamen
Aluminiumoxydhydrate großer Partikelfeinheit werden
im wesentlichen durch direkte Fällung des Aluminiumoxydhydrats hergestellt. Dadurch erhalten sie
sowohl den gewünschten kleinen Teilchendurchmesser
von weniger als 6 $\mu$m bei gleichzeitig sehr großer
spezifischer Oberfläche. Beide Parameter können
durch entsprechende Steuerung der Fällung beeinflußt
werden. Produkte, die ursprünglich eine größere
Partikelgröße als die erfindungsgemäß vorgesehene
haben und durch mechanische Zerkleinerung die
erfindungsgemäß vorgesehene Größe erhalten, sind
weniger geeignet.

Eine Desagglomeration von beim Trocknen der Filtrate
in Drehrohröfen und dgl. assoziierten bzw.
agglomerierten ("zusammengebackenen") Partikeln,
die jedoch bei der Fällung bereits die erforderlichen Partikelgrößen von weniger als 6 $\mu$m
hatten, ist in diesem Sinne nicht als mechanische Zerkleinerung anzusehen und daher akzeptabel. Der
Unterschied in der Wirksamkeit der feinen, gefällten Partikel gegenüber denen, die zwar gröber
gefällt, aber durch mechanische Zerkleinerung
unter 6 µm gebracht werden, ist zunächst nicht
erklärlich, kann aber möglicherweise darauf
zurückzuführen sein, daß die durch mechanische Zerkleinerung erhaltenen Partikel eine kleinere
spezifische Oberfläche haben.

Die Oberfläche des erfindungsgemäß eingesetzten
Aluminiumoxydhydrats hat eine Struktur, die
günstige katalytische Wirkungen auf das Basispolymer, auf den Vernetzungsprozeß, sowie auf die
Verzögerung der Alterungserscheinungen ausübt.

Außer der sehr vorteilhaften Oberflächenstruktur
der direkt gefällten Aluminiumoxydhydrat-Teilchen
sind auch die erfindungsgemäß inkorporierten und
angelagerten Spurenelemente unerwarteterweise von
Vorteil. Es handelt sich hierbei um einen relativ
hohen Anteil an Natriumoxyd und löslichem Natriumoxyd, das mit mehr als 0,25 %, vorzugsweise
mindestens 0,40 % im Aluminiumoxydhydrat enthalten
ist. Dieser Anteil umfaßt mindestens 0,05 %, vorzugsweise mindestens 0,10 % lösliches $Na_2O$, wobei
diese Mengenangaben auf den Aluminiumoxydhydrat-
Anteil bezogen sind. Vorteilhaft ist auch ein Anteil
von weniger als 0,20 % Fe im Aluminiumoxydhydrat.

Die katalytische Wirkung der großen spezifischen
Oberfläche des Aluminiumoxydhydrats mit der auf
Grund der direkten Fällung charakteristischen
Oberflächenstruktur dürfte zusammen mit dem Natriumoxyd-Zusatz für die hervorragenden Eigenschaften
der erfindungsgemäßen Polymermischungen die Ursache
sein. Dadurch wird offenbar unerwarteterweise
auch die Einmischbarkeit des Aluminiumoxydhydrats
in so hohen Konzentrationen von bis zu 150 -
180 Teilen bei gleichzeitiger guter Verarbeitbarkeit
und Flexibilität der Mischungen ermöglicht.

Wird ein Aluminiumoxydhydrat gewählt, dessen Korngröße von 0,1 - 2 $\mu$m und dessen spezifische Oberfläche mindestens 10 $m^2$/g beträgt, wobei die spezifische
Oberfläche durch Stickstoffadsorption nach der BET-
Methode (Brennauer, Emmet, Teller) bestimmt ist, so
erhält man Polymermischungen mit überraschenderweise besonders hohen Zerreißfestigkeitswerten.
Diese liegen über 10 Newton/$mm^2$ und können sogar
Werte von 12 - 18 Newton/$mm^2$ erreichen.

Bevorzugt wird hierfür ein Aluminiumoxydhydrat,
dessen Partikel zum überwiegenden Teil, vorzugsweise zu 99,5 %, kleiner als 1,0 $\mu$m sind und dessen
spezifische Oberfläche größer als 12 $m^2$/g ist.
Vorteilhaft ist es auch, wenn das Schüttgewicht
des Aluminiumoxydhydrats kleiner als 170 g/Liter
ist.

Ein Coaten der Oberfläche der Aluminiumoxydhydrat-
Partikel ist für die Einmischbarkeit des Aluminium-

0004017

oxydhydrats und die spätere Verarbeitbarkeit und Flammwidrigkeit der Polymermischungen nicht erforderlich, kann aber vorgesehen sein. Zum Coaten eignen sich in ansich bekannter Weise zum Beispiel Stearinsäure, Stearate, Öle, Silane, Organotitanate usw..

Wenn Silanzusätze auch nicht erforderlich sind, können sie aber den Zusammensetzungen insbesondere zur Verbesserung der elektrischen Eigenschaften, wie zum Beispiel zur Erhöhung des Isolationswiderstands beigegeben werden.

Neben diesen Zusätzen von Aluminiumoxydhydrat können den Mischungen auch weitere Füllstoffe mit verstärkender oder flammhemmender Wirkung zugesetzt sein. Hierzu gehören Stoffe wie Magnesiumcarbonat, Natriummetaborat, Magnesiumoxyd, aktive Kieselsäure, Siliziumoxyd, Silikate oder Ruße in geringen Mengen. Ebenso werden ihnen die sonst üblichen Zusätze beigefügt. So können sie die üblichen Weichmacher, wie z.B. Polymer-Weichmacher enthalten. Erfindungsgemäß besonders geeignet sind Weichmacher auf Basis von Phosphorsäureester, insbesondere Trikresylphosphat, Diphenylkresylphosphat in Mengen von 0 - 50 Teilen. Außerdem können ihnen die üblichen Antioxidantien, Alterungsschutzmittel und Stabilisatoren zugesetzt sein. Dafür finden vorwiegend Verbindungen auf aminischer oder phenolischer Basis Verwendung, z.B. Polymeres 2,2,4-Trimethyl-1,2-dihydrochinolin. Auch Trenn-

mittel können in den Mischungen enthalten sein.

Vorzugsweise werden die erfindungsgemäßen Mischungen vernetzt. Bei peroxidischer Vernetzung lassen sich die erreichbaren Zerreißfestigkeitswerte durch geeignete Dosierung der Peroxide und durch Verwendung von Vernetzungsverstärkern noch erhöhen. Als Vernetzungsverstärker kommen Triallylcyanurat oder besser noch di- und trifunktionelle Acrylat- und Methacrylatmonomere, Äthylenglykoldimethacrylat, Polyäthylenglykoldimethacrylat, Trimethylolpropantrimethacrylat usw. in Frage. Auch durch Zusätze von Organo-Titanaten kann die Zerreißfestigkeit erhöht werden. Hierfür sind zum Beispiel Isopropyl-Tri-(laurilmyristyl)-Titanat und Isopropyl-Triisostearoyl-Titanat geeignet. Auch Zusätze von siloxangruppenhaltigen Komponenten wie Polybutadien mit Siloxangruppen können von Vorteil sein.

Für die Herstellung von Kabelumhüllungen wird vorzugsweise die peroxidische Vernetzung angewandt. Aber auch andere Vernetzungssysteme wie zum Beispiel Strahlenvernetzung sind möglich. Bei flächigen Artikeln oder Profilen mit geringen Wanddicken empfiehlt sich die Strahlenvernetzung besonders. Das gilt auch für Gegenstände, bei denen die Anwendung von hohem Druck und hoher Temperatur bei der Vernetzung zu Schädigungen führen kann. Als Vernetzungsmittel kommen beispielsweise die weiter oben bereits aufgeführten üblichen und bekannten Substanzen in Frage.

0004017

In bestimmten Anwendungsfällen können die erfindungsgemäßen Polymermischungen auch unvernetzt verwendet werden. Um hohen Anforderungen gerecht zu werden, ist jedoch die Vernetzung der Polymermischungen erforderlich.

Werden nicht kompakte Polymermischungen oder Produkte gewünscht, ist es auch möglich, die erfindungsgemäßen Mischungen durch Zusatz bekannter physikalischer und chemischer Treibmittel aufzuschäumen.

Um die erfindungsgemäße hohe Füllung der Polymermischungen mit Aluminiumoxydhydrat bei guter Verteilung der Füllstoffe und ohne Anvernetzungen erzielen zu können, sind sorgfältige Mischprozeduren sowie eine gute Temperaturkontrolle erforderlich. Durch geeignete Einstellung der Mischungsviskositäten(des Verhältnisses und der Art der Komponenten im Basispolymergemisch, deren Molekulargewichte und Viskositäten, sowie der Art der Polymerisation und des Comonomeranteils), der Mischintensität (der Drehzahl der Kneterschaufeln oder Kneterschnecken), der Friktion und der anderen Mischungsbestandteile läßt sich das erreichen.

Für den Mischvorgang haben sich die Varianten einer sogenannten "upsidedown" Mischtechnik - d.h. ein Zusammenmischen aller Komponenten - als geeignet erwiesen. Für hohe Füllungsgrade ist jedoch eine schrittweise Zugabe der Füllstoffe und der anderen Ingredienzien in Portionen vorteilhaft. In diesem Fall sind zusätzlich höhere Mooney-Viskositäten der Basispolymere zweckmäßig. Wenn ein Basispolymergemisch aus mehreren Polymeren hergestellt werden soll, ist eine Vormischung der zwei oder drei verwendeten Basispolymere während etwa 2 – 3 Minuten zweckmäßig.

Wird nur ein einziges Basispolymer verwendet, so kann diese Vormischung entfallen. In diesem Fall ist es zur Erzielung hoher Füllungsgrade und einer guten Homogenität vorteilhaft, das Polymer in Form von Chips, Granulat oder Streifen einzusetzen und die Materialien in den stehenden (z.B. Banbury-) Kneter schichtweise einzubringen, d.h. eine Schicht Polymer (Elastomer), eine Schicht Aluminiumoxydhydrat, wieder eine Schicht Polymer, wieder Füllstoff, etc. dazwischen die anderen Ingredienzien. Danach wird bei zunächst niedrigerer Rotorendrehzahl und ohne Druck lose gemischt. Schließlich wird mit kontrolliertem Druck gemischt. Die Temperatur sollte dabei 100°C nicht übersteigen. So erhält man hoch gefüllte, sehr homogene Mischungen.

Die folgenden Beispiele für erfindungsgemäße Polymermischungen zeigen einige ihrer besonderen Vorteile:

Beispiel I

Äthylen-Acrylatkautschuk (Masterbatch
80 %-ig)                                          120 - 130 T
Aluminiumoxydhydrat gefällt
(Teilchengröße ≤ 6 μm, spezifische
Oberfläche ≥ 6 m$^2$/g, mehr als 0,25 %
$Na_2O$ und ca. 0,1 % $Na_2O$ löslich)            120 - 130 T
Trimethyldihydrochinolin                                  2 T
Verzögerer HVA                                            2 T
Dicumylperoxid (40 %-ig)                                  7 T
Trikresylphosphat                                 0 -  25 T

Der Oxygenindex dieser Mischung ist 28 - 35 %.
Das Compound weist erhöhte Ölbeständigkeit auf.
Es ist flexibel und hat eine gute Zerreißfestigkeit.

Beispiel II

| | |
|---|---|
| Äthylen-Acrylatkautschuk (Masterbatch 80 %-ig, Rest $SiO_2$, d.h. 20 T Polymer) | 25 T |
| EPDM (Mooney Visk. ca. 80) | 80 T |
| Trimethyldihydrochinolin | 1,5 T |
| PCD (Polycarbodiimid) | 0,3 T |
| Aluminiumoxydhydrat gefällt (Teilchengröße $\leq$ 6 /um, spezifische Oberfläche $\geq$ 6 m²/g, mehr als 0,25 % $Na_2O$ inkl.0,1 % $Na_2O$ löslich) | 150 T |
| Magnesiumcarbonat, basisch | 50 T |
| Vinylsilan oder Organotitanat | 0 – 2 T |
| Trikresylphosphat | 20 T |
| Mineralölweichmacher | 0 – 5 T |
| Triallylcyanurat | 1,5 T |
| Dicumylperoxid (40 %-ig) | 9 T |

Der Oxygenindex der Mischung beträgt 28 – 35 %.

Es handelt sich um eine Mischung, deren Basispolymergemisch 25 Teile eines 80 %-igen Masterbatch von Äthylen-Acrylatkautschuk und 80 Teile Äthylen-Propylen-Dien-Terpolymer enthält. Dieser Masterbatch seinerseits setzt sich zusammen aus ca. 80 % Polymer und ca. 20 % Füllstoff, der nicht als Basispolymer anzusehen ist. Das Vinylsilan ist für die Erzielung der hohen Füllbarkeit, der Flammwidrigkeit und der Ölbeständigkeit nicht notwendig, verbessert jedoch die elektrischen Eigenschaften und den Isolationswiderstand von Isoliermischungen. Bei Kabelmänteln oder anderen Artikeln, die keinen erhöhten Isolationswiderstand erfordern, wird es wegen einer zu erwartenden Verminderung der Bruchdehnung weggelassen.

Beispiel III

Äthylen-Acrylatkautschuk (Masterbatch
ca. 80 %-ig)                                          50 T
Äthylen-Äthylacrylat-Copolymer
(z.B. EEA)                                            50 T
Aluminiumoxydhydrat gefällt
(Teilchengröße $\leq$ 6 µm, spezifische
Oberfläche $\geq$ 6 m$^2$/g, mehr als 0,25 %
Na$_2$O inkl. 0,1 % Na$_2$O löslich)                 150 T
Magnesiumverbindung                                   50 T
DPK                                                   20 T
Triallylcyanurat                                       2 T
Di-tert-butylperoxydiisopropylbenzol                   7 T
PCD (Polycarbodiimid)                            0 – 11 T

Oxygenindex                                      28 – 30 %
Ölbeständigkeit                                   sehr gut

Die folgenden Beispiele zeigen erfindungsgemäße
flammwidrige Mischungen besonders hoher Zerreißfestigkeit und Ölbeständigkeit.

0004017

Beispiel IV

| | |
|---|---|
| Äthylen-Acrylatkautschuk ca. | 123 T |
| (etwa 80 %-iger Batch z.B. $SiO_2$, d.h. | |
| 100 T Polymer) | |
| Aluminiumoxydhydrat gefällt | |
| (Teilchengröße 0,1 - 1,0 µm, spezifische | |
| Oberfläche 12 - 15 $m^2$/g, mehr als 0,25 % | |
| $Na_2O$, inkl. ca. 0,1 % $Na_2O$ löslich) | 140 - 160 T |
| Alterungsschutzmittel | |
| z.B. polymerisiertes Trimethyl- | |
| dihydrochinolin | 1 - 2 T |
| Trikresylphosphat | 0 - 10 T |
| N,N'-m-phenylen-dimaleinimid | 1 - 2 T |
| Organotitanat | 0 - 2 T |
| Trennmittel (Stearinsäure) | 0 - 2 T |
| Triäthanolamin | 0 - 3 T |
| Peroxid, z.B. Dicumylperoxyd | |
| 40 %-ig | 5 - 8 T |

Diese Mischung hat einen Oxygenindex von ca. 28 - 32. Ihre Zerreißfestigkeit, getestet an vulkanisierten Platten, beträgt 18 N/mm$^2$, ihre Bruchdehnung 100 %. Nach Lagerung der Proben in ASTM-Öl Nr. 2 für die Dauer von 180 Stunden bei 90°C, änderten sich obige Werte um weniger als 20 %, d.h. die Mischung ist auch besonders ölbeständig.

## Beispiel V

| | |
|---|---|
| Äthylen-Acrylatkautschuk (80 %-iger Batch z.B. m. $SiO_2$) | 25 T |
| Copolymer Äthylen-Äthylacrylat | 80 T |
| Aluminiumoxydhydrat gefällt (Teilchengröße 0,1 - 1,0 µm, spezifische Oberfläche 12 - 15 $m^2$/g, mehr als 0,3 % $Na_2O$, inkl. ca. 0,1 % $Na_2O$ löslich) | 140 - 160 T |
| Organotitanat | 0 - 2 T |
| Alterungsschutzmittel (polym. Trimethyldihydrochinolin) | 1 - 2 T |
| Triäthanolamin | 0 - 3 T |
| Trikresylphosphat | 10 - 20 T |
| Mineralölweichmacher (paraffinisch) | 0 - 15 T |
| Polycarbodiimid | 0 - 2 T |
| Coagens (z.B. Triallylcyanurat alternativ Polyäthylenglykoldimethacrylat) | 0 - 2 T |
| Dicumylperoxid (40 %-ig) | 8 - 10 T |

Der Oxygenindex dieser Mischung beträgt 28 - 31, ihre Zerreißfestigkeit 12,5 - 14,5 N/$mm^2$ und ihre Bruchdehnung 180 - 220 %. Die Ölbeständigkeit wurde wieder in ASTM-Öl Nr. 2 bei 90°C geprüft. Nach 168 Stunden änderten sich die Werte um weniger als 20 %, d.h. besonders ölbeständig.

Beispiel  VI

| | |
|---|---|
| Acrylatkautschuk | 100 Teile |
| Aluminiumoxydhydrat gefällt (Teilchengröße 0,1 - 1,0 µm, spezifische Oberfläche 12 - 15 $m^2$/g, mehr als 0,3 % $Na_2O$, inkl. ca. 0,1 % $Na_2O$ löslich) | 140 - 160 T |
| Magnesiumcarbonat | 10 - 50 T |
| Siliciumdioxid | 0 - 30 T |
| Organotitanat | 1 - 3 T |
| Alterungsschutzmittel | 1 - 2 T |
| Triäthanolamin | 0 - 3 T |
| Mineralölweichmacher | 0 - 15 T |
| Trikresylphosphat | 5 - 20 T |
| Bleimennige | 5 - 30 T |
| 3-(3,4-dichlorphenyl)-1,1-dimethyl-harnstoff | 0,5 - 3 T |

Diese Mischung hat einen Oxygenindex von ca. 30 - 32 und eine Zerreißfestigkeit von 10 - 14 Newton/$mm^2$. Die Ölbeständigkeit ist gut.

Die Einsatzmöglichkeiten der erfindungsgemäßen Mischungen sind aufgrund ihrer sehr guten Eigenschaften überaus vielseitig. Das beruht auf ihrer gleichzeitigen Flammwidrigkeit, Ölbeständigkeit und Raucharmut ebenso, wie auf ihrer Nichtkorrosivität, Flexibilität und ihren guten mechanischen Eigenschaften.

Bei elektrischen Kabeln und Leitungen werden nicht nur die bisher auch schon flammwidrigen Schichten, also der Außenmantel und ggf. der Innenmantel aus den Polymermischungen nach der Erfindung hergestellt. Bessere Ergebnisse in der Flammwidrigkeit lassen sich noch erzielen, wenn alle Schichten des Kabels aus den erfindungsgemäßen Mischungen hergestellt werden.

Es sind aber auch kombinierte Lösungen möglich, wobei nur die äußeren Schichten wie der Außenmantel oder die Deckschicht und ggf. auch Zwischenschichten flammwidrig sind. Die inneren Schichten oder Isolierungen können aus nicht flammwidrigen Compounds bestehen und sind durch die äußeren, flammwidrigen Schichten geschützt.

Die Flammwidrigkeit und damit die Funktionssicherheit werden darüber hinaus durch zusätzliche konstruktive Maßnahmen noch erhöht. So können zusätzliche Umhüllungen aus nichtorganischen, mineralischen oder metallischen Schichten, wie beispielsweise Glimmerbänder, Glasfaserbänder, Asbestbänder oder Metallbänder, aufgebracht werden. Auch bei der Herstellung anderer technischer Artikel ist die Kombination der erfindungsgemäßen flammwidrigen Polymermischungen mit mineralischen oder metallischen Materialien zur Verbesserung ihrer Flammwidrigkeit möglich.

- 23 -    B 77/112 Hr

<u>P a t e n t a n s p r ü c h e</u>

1. Halogenfreie Polymermischungen, <u>dadurch gekenn-</u>
<u>zeichnet</u>, daß sie als Basispolymere Copolymere
von Olefinen mit Acrylsäureestern, Äthylen-
Acrylatkautschuk, Acrylatkautschuk oder deren
Verschnitte untereinander oder mit anderen polymeren Zusätzen wie Nitrilkautschuk, Polyäthylen
oder Copolymerisaten von Olefinen und als Zusatz
- bezogen auf 100 Teile Basispolymergemisch -
90 - 200 Teile Aluminiumoxydhydrat enthalten,
dessen Teilchengröße überwiegend kleiner als
6 $\mu$m ist, das eine spezifische Oberfläche von

- 24 -

mindestens 6 m$^2$/g hat und das - bezogen auf den Aluminiumoxydanteil - mehr als 0,25 % Na$_2$O einschließlich mindestens 0,05 % lösliches Na$_2$O enthält.

2. Polymermischungen nach Anspruch 1, <u>dadurch gekennzeichnet</u>, daß sie auf 100 Teile Basispolymergemisch 120 - 180 Teile Aluminiumoxydhydrat enthalten.

3. Polymermischungen nach Anspruch 1 oder 2, <u>dadurch gekennzeichnet</u>, daß die Teilchengröße von höchstens 6 μm und die spezifische Oberfläche der Aluminiumoxydhydrat-Partikel von mindestens 6 m$^2$/g durch Fällung des Aluminiumoxydhydrats erzielt wurden.

4. Polymermischungen nach Anspruch 1, 2 oder 3, <u>dadurch gekennzeichnet</u>, daß das Aluminiumoxydhydrat mindestens 0,4 % Na$_2$O einschließlich mindestens 0,10 % lösliches Na$_2$O enthält.

5. Polymermischungen nach einem der Ansprüche 1 bis 4, <u>dadurch gekennzeichnet</u>, daß sie bezogen auf 100 Teile Basispolymergemisch zusätzlich 10 - 50 Teile Natriummetaborat, Magnesiumoxyd, Magesiumoxydhydrat und/oder 10 - 70 Teile Magnesiumcarbonat enthalten.

0004017

6. Polymermischungen nach einem der Ansprüche 1 bis 5, dadurch gekennzeichnet, daß sie als Weichmacher 0 - 50 Teile Trikresylphosphat oder Diphenylkresylphosphat enthalten.

7. Polymermischungen nach einem der Ansprüche 1 bis 6, dadurch gekennzeichnet, daß in 100 Teilen Basispolymergemisch mindestens 20 Teile Äthylenacrylat-Kautschuk und/oder Nitrilkautschuk enthalten sind.

8. Polymermischungen nach einem der Ansprüche 1 bis 7, dadurch gekennzeichnet, daß das Aluminiumoxydhydrat eine Teilchengröße von 0,01 - 2,0 µm und eine spezifische Oberfläche von mindestens 12 m$^2$/g hat.

9. Polymermischungen nach einem der Ansprüche 1 bis 8, dadurch gekennzeichnet, daß das Aluminiumoxydhydrat ein Schüttgewicht von weniger als 170 g/Liter hat.

10. Polymermischungen nach einem der Ansprüche 1 bis 9, dadurch gekennzeichnet, daß sie vernetzt sind.

11. Verwendung von Polymermischungen nach einem der Ansprüche 1 bis 10 als Isoliermischungen, Füllmischungen und/oder Mantelmischungen für elektrische Kabel und Leitungen.

12. Verwendung von Polymermischungen nach einem der Ansprüche 1 bis 10 für die Herstellung von Boden- und Wandbelägen von technischen Artikeln, wie z.B. Transportbändern, Dichtungen, beschichtete Textilien usw..

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | H 01 B 3/44<br>C 08 L 23/08<br>33/08 |
| X | DE - A - 2 263 361 (SHOWA DENKO)<br>* Page 2, line 28 - page 9, line 19 * | 1,2,3,<br>4,8,11<br>12 | |
| X | DE - A - 2 050 581 (RAYCHEM)<br>* Claims 1-5,18,20 * | 1,2,3,<br>8,10,<br>11 | |
| P | GB - A - 1 527 668 (THE BURNS & RUSSELL COMPANY OF BALTIMORE)<br>* Claims 1,2 * | 1,5 | TECHNICAL FIELDS SEARCHED (Int.Cl.³) |
| A | FR - A - 2 052 085 (UNION CARBIDE)<br>* Claims 1-3 * | 1 | H 01 B 31/44<br>C 08 K 3/22<br>C 08 L 23/00<br>23/02<br>23/04<br>23/08<br>33/08<br>33/06<br>33/04 |
| A | US - A - 3 979 356 (ROBERT B. WALTERS)<br>* Claim 1 * | 1,10 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-06-1979 | GOOVAERTS |

EPO Form 1503.1 06.78